# EUROPEAN PATENT SPECIFICATION

(11) **EP 1 195 978 B1**
(45) Date of publication and mention of the grant of the patent: **14.01.2009**
(21) Application number: 01308551.9
(22) Date of filing: 05.10.2001
(51) Int. Cl.: H04M 9/08

(54) **Method for handling far-end speech effects in hands-free telephony systems based on acoustic beamforming**
Verfahren zur Bearbeitung von Fernsprachsignalwirkungen in Freisprechsystemen durch akustische Strahlbildung
Procédé pour le traitement des effets dus au signal de parole à l'extremité distante dans un système mains libres utilisant une formation de faisceau acoustique

(30) Priority: 06.10.2000 GB 0024582
(43) Date of publication of application: 10.04.2002
(73) Proprietor: Mitel Networks Corporation, Ottawa, ON K2K 2W7 (CA)
(72) Inventor: Beaucoup, Franck, Ontario K0A 1T0 (CA)
(74) Representative: Read, Matthew Charles

(56) References cited:
- EP-A- 0 386 765
- US-A- 5 027 393
- LUCKINBILL C: "ACOUSTIC PROXIMITY DETECTION VOX EMPLOYING TWO MICROPHONES" MOTOROLA TECHNICAL DEVELOPMENTS, MOTOROLA INC. SCHAUMBURG, ILLINOIS, US, vol. 25, 1 July 1995 (1995-07-01), pages 42-43, XP000524330 ISSN: 0887-5286
- KELLERMANN W: "Strategies for combining acoustic echo cancellation and adaptive beamforming microphone arrays" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, 21 April 1997 (1997-04-21), pages 219-222, XP010226174 ISBN: 0-8186-7919-0

## Description

### FIELD OF THE INVENTION

The present invention relates generally to telephony systems and in particular to a method and apparatus for minimizing the effects of far-end speech on beamformer operation in a hands-free environment

### BACKGROUND OF THE INVENTION

Localization of sources is required in many applications, such as teleconferencing, where the source position is used to steer a high quality microphone beam toward the talker In video conferencing systems, the source position may additionally be used to focus a camera on the talker.

It is known in the art to use electronically steerable arrays of sensors in combination with location estimator algorithms to pinpoint the location of a talker in a room (see Adaptive Filter Theory, 3rd edition. Simon Haykin, Prentice Hall, 1996. ISBN 0-13-322-760-X). This talker localization functionality can be implemented either as a separate module feeding the beamformer with the talker position (see commonly assigned UK patent application no. 0016142.2, entitled AcousticTalker Localization by Maziar Amiri, Dieter Schulz, Michael Tetelbaum) or as part of an adaptive beamforming algorithm (see US Patent No. 4,956,867 entitled Adaptive Beamforming for Noise Reduction). In this way, high quality and complex beamformers have been used to measure the power at different positions. Estimator algorithms locate the dominant audio source using power information received from the beamformers

Attempts have been made at improving the performance of prior art beamformers by enhancing acoustical audibility using filtering, etc. The foregoing prior an methodologies are described in *Speaker localization using a steered Filler and sum Beamformer.* N. Strobel, T. Meter, R. Rabenstein, presented at the Erlangen work shop 99, vision, modeling and visualization, November 17-19th, 1999, Erlangen, Germany

Irrespective of the beamformer implementation, talker localization is affected by far-end speech, which can be annoying for the far-end talker when speech resumes at the near end. More precisely, if the system steers the beam towards a different location than the near end talker (e.g corresponding to either the direct or an indirect path from the speakerphone to the microphone array) during far-end speech, a penod of time is required before the device is able to steer the array back to the near-end talker when near-end speech resumes. The acoustic quality of the near-end signal output by the beamformer is adversely affected during that tune period Furthermore, this spurious switching of the source position may affect otherwise useful statistics about the positions which have been localized or identified as talkers by the device

A number of publications have addressed the issue of two-way communication systems using beamforming (e.g. Strategies for Combining Acoustic Echo Cancellation and Adaptive Beamforming Microphone Arrays by W. Kellermann. Proc. IEEE ICASSP, vol. 1. 1997 is a study of the effect of beamforming on accoustic echo cancellation) However none of these publications discuss the influence of far-end voice activity on talker localization. Many other publications relate to acoustic beamforming with one-way communication only, where there is no far-end speech.

### SUMMARY OF THE INVENTION

The present invention provides a solution to the problem of far-end speech affecting operation of the beamforming device It should be noted that this problem arises both in half-duplex and full-duplex communication systems, both of which are addressed by the present invention.

According to the invention, a method of minimizing the effects of far-end speech on beamformer operation in a hands-free telephone, which comprises a speaker for receiving a far-end signal and generating an output acoustic signal in the acoustical environment of the telephone, a microphone array for receiving a talker signal from a talker in said acoustical environment and generating a microphone signal accordingly and means arranged to perform a beamforming function for forming a near-end signal from said microphone signal, comprises the steps of calculating the respective signal energies of said far-end signal and said near-end signal, comparing said signal energies and, in the event the signal energy of the far-end signal exceeds the energy of the near-end signal by more than a predetermined amount, freezing a whole adaptation process of said means , said whole adaptation process applying to said beamforming function and a beamsteering function, said beamsteering function comprising locating said talker and, in response to said location, steering the microphone array towards said talker.

The invention further provides a hands-free telephone comprising a speaker for receiving a far-end signal and generating an output acoustic signal in the acoustical environment of the hands-free telephone, a microphone array for receiving a talker signal from a talker in said acoustical environment and generating a microphone signal accordingly, means arranged to perform a beamforming function for forming a near-end signal from said microphone signal and a far-end activity detector for calculating and comparing respective energies of said near-end signal and said far-end signal, wherein said means is arranged to perform a beamsteering function for locating the position of said talker and, in response, steering said microphone array toward said talker and to be subject to a whole adaptation process, said whole adaptation process applying to said beamforming function and said beamsteering function, and the far-end activity detector is arranged to freeze said whole adaptation process in the event that the far-end signal exceeds the near-end signal by more than a predetermined amount.

In this manner, a mechanism can be provided that freezes the adaptation process of the beamforming device, including steering functionality, during far-end speech. In particular, a far-end activity detector is embedded in the beamforming device. The steering of the beam can be frozen as soon as the activity detector indicates that the far-end signal energy is high relative to the near-end signal energy. The steering may resume as soon as the far-end speech stops and near-end speech resumes.

### BRIEF DESCRIPTION OF THE DRAWINGS

A preferred embodiment of the present invention will now be described more fully with reference to the accompanying drawings in which:
Figure 1 is a block diagram of a beamforming device incorporating the system outside the scope of the present invention, and
Figure 2 is a block diagram of a far-end activity detector suitable for use in a preferred embodiment of the invention.

### DETAILED DESCRIPTION OF THE PREFERRED EMBODIMENT

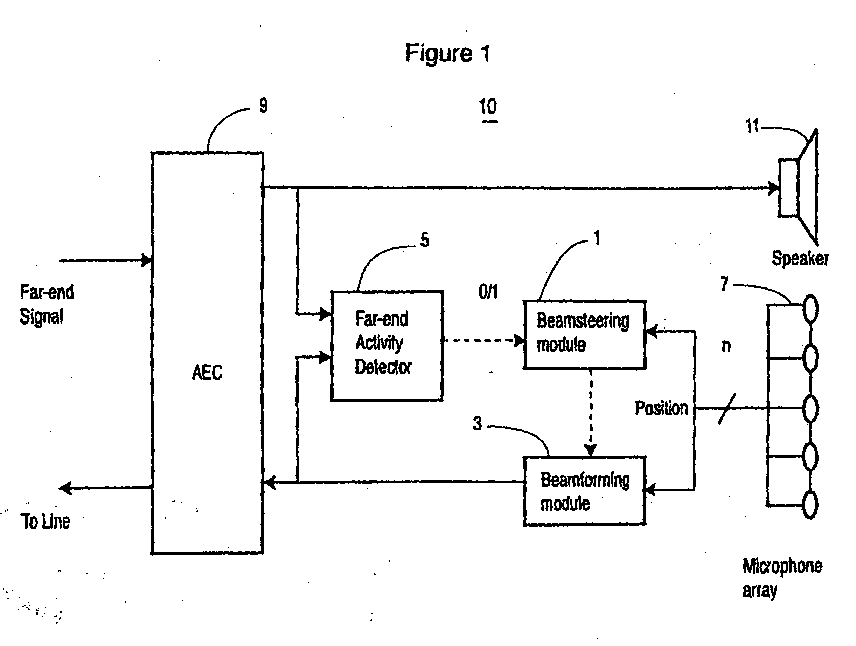

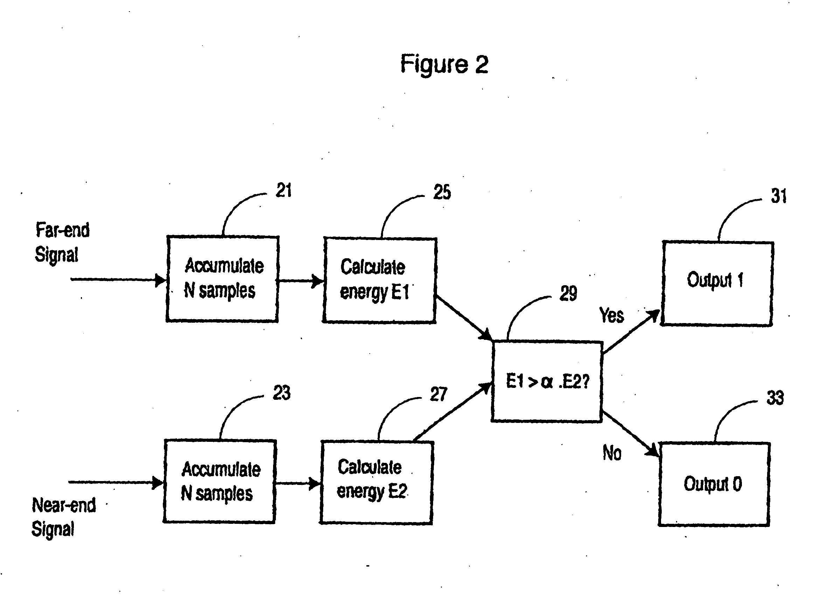

With reference to Figure 1, a hands-free telephone outside the scope of the present invention is shown, which incorporates a beamforming device. In the illustrated embodiment the beamforming device is implemented as two separate modules: a beamsteering module 1 for the steering, and a beamforming module 3 for forming the beam. Alternatively, an adaptive beamformer may be used which combines the beamsteering and beamforming functions. In order to freeze the steering functionality of the beamforming device during far-end speech, the beamsteering module 1 receives a signal from the output of an activity detector 5 which scans both the far-end and the near-end signals, as described in greater detail below with reference to Figure 2. The function of the activity detector is to indicate periods of far-end activity or, more precisely, periods where the far-end signal energy is high relative to the near-end signal energy.

In an arrangement according to the present invention, the whole adaptation process of the beamforming device 1, 3 is frozen during far-end speech activity periods. Where an adaptive beamformer is provided, which combines the functions of the beamsteering module 1 and beamforming module 3, the output of the far-end activity detector 5 is fed directly to the beamformer itself.

In the hands-free arrangement of Figure 1, a microphone array 7 is represented as a linear array, although any array geometry may be used for implementing the present invention. An Acoustic Echo Cancellation (AEC) block 9 is provided to maximize the speech quality for the far-end talker by means of canceling acoustic echo that arises in the near-end hands-free environment. A speaker 11 is provided for reproducing the far-end speech signal, in a well-known manner.

The details of the far-end activity detector suitable for use in the present invention are set forth in Figure 2. Samples of a few milliseconds of the far-end and near-end signals are accumulated in modules 21 and 23. For each such time interval, short-term energies are calculated in modules 25 and 27, and are compared to each other in module 29. If the far-end energy is greater than the near-end energy times a predetermined threshold (which depends on the output level of the speaker 11) then the activity detector outputs a 1 (i.e, a logic high signal) from block 31, otherwise it outputs 0 (i.e. a logic low signals) from block 33. In the arrangement of Figure 1, these outputs are applied to the beamsteering module 1. If the output is 1 then steering is frozen until the beamsteering module receives a 0 output from block 33 the activity detector 5.

It should be noted that, if the user adjusts the speaker volume during a hands-free conversation, the aforementioned threshold must be adjusted accordingly, in real time.

Many acoustic echo cancellation algorithms, whether they are half-duplex or full-duplex, already incorporate activity detectors for the far-end signal (see commonly assigned US Patent No 4,796,287 entitled Digital Loudspeaking Telephone, and US Patent No. 5,706,344 entitled Acoustic Echo Cancellation in an Integrated Audio and Telecommunication System). For full-duplex systems, where an adaptive algorithm is used to fit a model to the acoustic echo path, it may be desirable that no adaptation be done in the absence of far-end speech (that is, in the absence of a sufficiently loud reference signal). If such an algorithm is already used in the system, then the far-end activity detector 5 can simply reuse some of the internal results (such as short-term energies) already calculated. In such an application, the implementation of such a mechanism contributes virtually no additional cost in terms of complexity.

Alternatives and variations of the invention are possible. For example, the actual structure of the far-end activity detector 5 can be different from the preferred embodiment set forth above with reference to Figure 2. Many variations are possible as long as the function of the far-end activity remains to indicate periods where the far-end signal energy is high relative to the near-end signal energy. For instance, the near-end signal fed to the far-end activity detector 5 does not have to be the output of the beamforming module 3, as shown in Figure 1. It can be any combination of the microphone inputs 7, provided that the activity detector 5 continues to function as set forth above

All such embodiments, modifications and applications are believed to be within the scope of the invention as defined by the claims appended hereto.

## Claims

1. A method of minimizing the effects of far-end speech on beamformer operation in a hands-free telephone which comprises a speaker (11) for receiving a far-end signal and generating an output acoustic signal in the acoustical environment of the telephone, a microphone array (7) for receiving a talker signal from a talker in said acoustical environment and generating a microphone signal accordingly and means (1, 3) arranged to perform a beamforming function for forming a near-end signal from said microphone signal; the method comprising the steps of:
calculating the respective signal energies of said far-end signal and said near-end signal; and
comparing said signal energies; said method **characterised by:**
in the event the energy of the far-end signal exceeds the energy of the near-end signal by more than a predetermined amount, freezing a whole adaptation process of said means (1, 3), said whole adaptation process applying to said beamforming function and a beamsteering function, said beamsteering function comprising locating the position of said talker and, in response, steering the microphone array (7) towards said talker.

2. A hands-free telephone comprising:
a speaker (11) for receiving a far-end signal and generating an output acoustic signal in the acoustical environment of the hands-free telephone;
a microphone array (7) for receiving a talker signal from a talker in said acoustical environment and generating a microphone signal accordingly;
means (1, 3) arranged to perform a beamforming function for forming a near-end signal from said microphone signal; and
a far-end activity detector (5) for calculating and comparing respective energies of said near-end signal and said far-end signal;
said hands-free telephone **characterised in that:**
said means (1, 3) is arranged to perform a beamsteering function for locating the position of said talker and, in response, steering said microphone array (7) toward said talker and said means (1,3) is arranged to be subject to a whole adaptation process, said whole adaptation process applying to said beamforming function and said beamsteering function; and
the far-end activity detector (5) is arranged to freeze said whole adaptation process in the event that the energy of the far-end signal exceeds the energy of the near-end signal by more than a predetermined amount.

3. The hands-free telephone of claim 2, wherein said means (1, 3) comprises a beamforming module (3) for locating the position of said talker, and a beamsteering module (1) for steering said microphone array (7).

4. The hands-free telephone of claim 2, wherein said means (1, 3) is an adaptive beamformer for performing dual functions of locating the position of said talker and steering said microphone array (7).

5. The hands-free telephone of claim, 4, wherein said means (1, 3) is arranged to receive an output of said far-end activity detector (5) directly.

6. The hands-free telephone of any one of claims 2 to 5, wherein said far-end activity detector (5) further comprises:
a pair of accumulators for storing respective samples of said near-end signal and said far-end signal;
a pair of modules for calculating the acoustic energies of said respective samples of said near-end signal and said far-end signal; and
a comparator for comparing said acoustic energies and, in the event the far-end acoustic energy exceeds the near-end acoustic energy by more than said predetermined amount, freezing said whole adaptation process.

7. The hands-free telephone of any of claims 2 to 6, further comprising an echo canceller (9) for cancelling echo signals resulting from the far-end signal in said acoustical environment.

## Patentansprüche

1. Verfahren zur Minimierung von Fernspracheffekten auf einen Strahlbildungsbetrieb in einer Freisprechanlage, welche einen Lautsprecher (11) zum Empfangen eines Fernsignales und zum Erzeugen eines akustischen Ausgabesignales in der akustischen Umgebung der Anlage, ein Mikrofonfeld (7) zum Empfangen eines Sprechersignales von einem Sprecher in der akustischen Umgebung und zum Erzeugen eines entsprechenden Mikrofonsignales und eine Einrichtung (1, 3) umfasst, die dazu ausgelegt ist, eine Strahlbildungsfunktion zum Bilden eines Nahsignales aus dem Mikrofonsignal durchzuführen; wobei das Verfahren die Schritte umfasst:
Berechnen der jeweiligen Signalenergien des Fernsignales und des Nahsignales; und
Vergleichen der Signalenergien;
das Verfahren ist **gekennzeichnet durch**:
Einfrieren eines gesamten Anpassungsprozesses der Einrichtung (1, 3) für den Fall, dass die Energie des Fernsignales die Energie des Nahsignales um mehr als einen vorbestimmten Betrag übersteigt, wobei die gesamte Anpassungsfunktion auf die Strahlbildungsfunktion und eine Strahllenkungsfunktion angewendet wird,
wobei die Strahllenkungsfunktion Auffinden der Position des Sprechers und als Antwort Lenken des Mikrofonfeldes (7) in Richtung des Sprechers umfasst.

2. Freisprechanlage, umfassend:
einen Lautsprecher (11) zum Empfangen eines Fernsignales und zum Erzeugen eines akustischen Ausgabesignales in der akustischen Umgebung der Freisprechanlage;
ein Mikrofonfeld (7) zum Empfangen eines Sprechersignales von einem Sprecher in der akustischen Umgebung und zum Erzeugen eines entsprechenden Mikrofonsignales;
eine Einrichtung (1, 3), die dazu ausgelegt ist, eine Strahlbildungsfunktion zum Bilden eines Nahsignales aus dem Mikrofonsignal durchzuführen; und
einen Fernaktivitätsdetektor (5) zum Berechnen und zum Vergleichen jeweiliger Energien des Nahsignales und des Fernsignales;
wobei die Freisprechanlage **dadurch gekennzeichnet ist, dass**:
die Einrichtung (1, 3) dazu eingerichtet ist, eine Strahllenkungsfunktion zum Auffinden der Position des Sprechers und als Antwort zum Lenken des Mikrofonfeldes (7) in Richtung des Sprechers durchzuführen, und die Einrichtung (1, 3) dazu eingerichtet ist, einem gesamten Anpassungsprozess zu unterliegen, wobei der gesamte Anpassungsprozess auf die Strahlbildungsfunktion und die Strahllenkungsfunktion angewendet wird; und
der Fernaktivitätsdetektor (5) dazu eingerichtet ist, den gesamten Anpassungsprozess für den Fall einzufrieren, dass die Energie des Fernsignales die Energie des Nahsignales um mehr als einen vorbestimmten Betrag übersteigt.

3. Freisprechanlage nach Anspruch 2, wobei die Einrichtung (1, 3) ein Strahlbildungsmodul (3) zum Auffinden der Position des Sprechers und ein Strahllenkungsmodul (1) zum Lenken des Mikrofonfeldes (7) umfasst.

4. Freisprechanlage nach Anspruch 2, wobei die Einrichtung (1, 3) ein adaptiver Strahlbilder zum Durchführen von dualen Funktionen des Auffindens der Position des Sprechers und Lenkens des Mikrofonfeldes (7) ist.

5. Freisprechanlage nach Anspruch 4, wobei die Einrichtung (1, 3) dazu eingerichtet ist, eine Ausgabe des Fernaktivitätsdetektors (5) direkt zu empfangen.

6. Freisprechanlage nach einem der Ansprüche 2 bis 5, wobei der Fernaktivitätsdetektor (5) ferner umfasst:
ein Paar von Akkumulatoren zum Speichern von jeweiligen Proben des Nahsignales und des Fernsignales;
ein Paar von Modulen zum Berechnen der akustischen Energien der jeweiligen Proben des Nahsignales und des Fernsignales; und
einen Vergleicher zum Vergleichen der akustischen Energien und zum Einfrieren des gesamten Anpassungsprozesses für den Fall, dass die fernakustische Energie die nahakustische Energie um mehr als einen vorbestimmten Betrag übersteigt.

7. Freisprecheinrichtung nach einem der Ansprüche 2 bis 6, ferner umfassend:
einen Echounterdrücker (9) zum Unterdrücken von Echosignalen, die in der akustischen Umgebung aus den Fernsignalen resultieren.

## Revendications

1. Procédé de minimisation des effets dus au signal de parole à l'extrémité distante dans un système de téléphone mains libres utilisant une formation de faisceau acoustique, qui comprend un haut-parleur (11) pour recevoir un signal à l'extrémité distante et générer un signal acoustique de sortie dans l'environnement acoustique du téléphone, une rangée de microphones (7) pour recevoir un signal de la personne qui parle dans ledit environnement acoustique et générer un signal de microphone en conséquence, et des moyens (1, 3) disposés de façon à réaliser une formation de faisceau acoustique pour former un signal à l'extrémité proche provenant dudit signal de microphone ; ledit procédé comprenant les étapes consistant à :
calculer les énergies de signal respectives dudit signal à l'extrémité distante et dudit signal à l'extrémité proche ; et
comparer lesdites énergies de signal ;
ledit procédé étant **caractérisé en ce que :**
dans le cas où l'énergie du signal à l'extrémité distante dépasse l'énergie du signal à l'extrémité proche de plus d'une quantité prédéterminée, le gel du processus d'adaptation totale desdits moyens (1, 3), ledit processus d'adaptation total s'applique à ladite fonction de formation de faisceau acoustique et à ladite fonction d'orientation du faisceau acoustique, ladite fonction d'orientation du faisceau acoustique comprenant la localisation de la position de ladite personne qui parle et, en réponse, l'orientation de la rangée de microphone (7) vers ladite personne qui parle.

2. Téléphone mains libres comprenant :
un haut-parleur (11) pour recevoir un signal de l'extrémité distante et générer un signal acoustique de sortie dans l'environnement acoustique du téléphone à mains libres,
une rangée de microphones (7) pour recevoir un signal d'une personne qui parle dans ledit environnement acoustique et générer un signal de microphones en conséquence ;
des moyens (1,3) disposés de façon à effectuer la fonction de formation de faisceau acoustique, pour former un signal à l'extrémité proche provenant dudit signal de microphone, et
un détecteur d'activité à l'extrémité distante (5) pour calculer et comparer les énergies respectives dudit signal à l'extrémité proche et dudit signal à l'extrémité distante ;
ledit téléphone à mains libres étant **caractérisé en ce que :**
lesdits moyens (1, 3) sont disposés de façon à effectuer une fonction d'orientation du faisceau acoustique pour localiser la position de ladite personne qui parle, et en réponse, l'orientation de ladite rangée de microphone (7) vers ladite personne qui parle et, lesdits moyens (1, 3) étant disposés de façon à être soumis à un processus d'adaptation totale, ledit processus d'adaptation totale s'appliquant à ladite fonction de formation de faisceau acoustique et à ladite fonction d'orientation du faisceau acoustique ; et
le détecteur d'activité à l'extrémité distante (5) est disposé de façon à geler ledit processus d'adaptation total, dans le cas où l'énergie du signal à extrémité distante dépasse l'énergie du signal à l'extrémité proche de plus d'une quantité prédéterminée.

3. Téléphone mains libres selon la revendication 2, dans lequel lesdits moyens (1, 3) comprennent un module de formation de faisceau acoustique (3) pour localiser la position de ladite personne qui parle, et un module d'orientation de faisceau acoustique (1) pour orienter ladite rangée de microphones (7).

4. Téléphone mains libres selon la revendication 2, dans lequel lesdits moyens (1, 3) sont un système de formation de faisceau acoustique adaptatif, permettant d'effectuer les doubles fonctions de localisation de la position de ladite personne qui parle et d'orienter ladite rangée de microphones (7).

5. Téléphone mains libres selon la revendication 4, dans lequel ledit moyen (1, 3) est disposé de façon à recevoir une sortie dudit détecteur d'activité à l'extrémité distante (5) directement.

6. Téléphone mains libres selon l'une quelconque des revendications 2 à 5, dans lequel ledit détecteur d'activité à l'extrémité distante (5) comprend en outre :
une paire d'accumulateurs pour stocker des échantillons respectifs dudit signal à l'extrémité proche et dudit signal à l'extrémité distante ;
une paire de modules destinés à calculer les énergies acoustiques desdits échantillons respectifs dudit signal à l'extrémité proche et dudit signal à l'extrémité distante ; et
un comparateur pour comparer lesdites énergies acoustiques et, dans le cas où l'énergie acoustique à l'extrémité distante dépasse l'énergie acoustique à l'extrémité proche de plus d'une quantité prédéterminée, geler ledit processus d'adaptation total.

7. Téléphone à mains libres, selon l'une quelconque des revendications 2 à 6, comprenant en outre un compensateur d'écho (9) pour effacer les signaux d'écho résultant du signal à l'extrémité distante dans ledit environnement acoustique.
